# EUROPEAN PATENT APPLICATION

(11) **EP 4 266 059 A1**
(43) Date of publication of application: **25.10.2023**
(21) Application number: 21906529.9
(22) Date of filing: 10.12.2021
(51) Int. Cl.: G01N 35/00, G01N 35/02, G01N 1/00, G01N 1/10

(54) **METHOD FOR CONTROLLING SAMPLE PRETREATMENT DEVICE**

(30) Priority: 16.12.2020 JP 2020208195
(71) Applicant: HITACHI HIGH-TECH CORPORATION, Tokyo 105-6409 (JP)
(72) Inventor: SUZUKI Akiko, Tokyo 105-6409 (JP); MATSUOKA Shinya, Tokyo 105-6409 (JP); EBIHARA Daisuke, Tokyo 105-6409 (JP); MATSUO Sumiaki, Tokyo 105-6409 (JP)
(74) Representative: MERH-IP Matias Erny Reichl Hoffmann Patentanwälte PartG mbB
(86) International application number: PCT/JP2021/045656
(87) International publication number: WO 2022/131167

(57) **Abstract**

To provide a control method of a sample pretreatment apparatus capable of maintaining measurement precision in a mass spectrometer without newly installing a component part and without largely changing a measurement process by an automatic analyzer. A control method of a sample pretreatment apparatus 1 of a sample inspection automation system to which a sample pretreatment apparatus applying pretreatment to a sample used in mass spectrometry, a mass spectrometer, and another automatic analyzer are connected, includes: determining serum information by referring to a measurement result of the sample by the other automatic analyzer or previous value information; determining conditions of a washing process of eliminating impurities contained in the sample at the time of the sample pretreatment based on the serum information; and dispensing a cleaning fluid into a reaction container for mixing the sample and a reagent based on the conditions.

## Description

### Technical Field

The present invention relates to a control method of a sample pretreatment apparatus that automates a pretreatment process in a sample inspection automation system intended to analyze a concentration of a predetermined component in a biological sample such as blood or urine (hereinafter referred to as a sample).

### Background Art

As an example of a sample inspection automation system in which a pretreatment process is automated, PTL 1 describes a sample inspection automation system including a dispensing device and an automatic analyzer. The sample inspection automation system includes a hemolysis, chyle, and jaundice measurement device that measures presence or absence of hemolysis, chyle, and jaundice in serum, and selects a measurement result of the hemolysis, the chyle, and the jaundice and an inspection item for the automatic analyzer.

### Citation List

### Patent Literature

PTL 1: JPH07-280814A

### Summary of Invention

### Technical Problem

In a mass spectrometer in which a pretreatment process is automated, a high lipid containing sample or the like which affects measurement may be overlooked by automatically processing serum information that is visually checked in the related art.

Further, in the mass spectrometer in which the pretreatment process is automated, removal of phospholipids that affect the measurement may be insufficient by automatically processing sample pretreatment that is performed by a main method in the related art.

The phospholipids contained in a biological sample such as serum and plasma cause ionization suppression of a target component (hereinafter, referred to as ion suppression) in measurement by a liquid chromatograph mass spectrometer (LC/MS), and are remarkably generated particularly in the high lipid containing sample containing the phospholipids at a high value. Further, the ion suppression is not generated only in the phospholipids, and in an analyzer using an electrospray ionization method (ESI method), since the ESI method is characterized by preferentially ionizing molecules that are likely to be ionized, the ion suppression is also generated in a case in which a measurement target substance and impurities are in a state of not being separated and the impurities that are more likely to be ionized than the measurement target substance are contained, or in a case in which impurities that interfere with ion evaporation of molecules of the measurement target substance are contained.

In the liquid chromatography mass spectrometry (LC/MS method), there is a problem in that quantitativity of mass spectrometry decreases, for example, ion suppression is generated due to impurities and phospholipids in a biological sample during ionization of a target component, an analysis target component to be present cannot be detected at all, and a false low value of a measurement result is generated. When the mass spectrometer is used in a state in which the quantitativity of mass spectrometry is not ensured, for example, when measurement of blood drug monitoring (TDM) in a patient sample during treatment with an immunosuppressive agent is performed, there is a risk that accurate disease state management and medication administration management cannot be performed.

Further, in a case in which the high lipid containing sample is overlooked, when a sample containing lipids exceeding a normal amount is injected into the mass spectrometer, there is a risk that contamination of the mass spectrometer and contamination of a detector of the mass spectrometer occur, and failure or breakage of the mass spectrometer or deterioration of the mass spectrometer is accelerated. In order to prevent contamination of the mass spectrometer and the detector, the pretreatment process to the sample to be injected is fairly important.

Similarly to the contamination risks of the mass spectrometer and the detector, the sample pretreatment process for the high lipid containing sample is also important for preventing contamination of a column used in a liquid chromatograph (LC). Injection of a sample containing lipids exceeding a normal amount may deteriorate performance of the column or shorten a life of the column.

As a washing method for removing lipids, there are known methods such as using a washing process using hydrophobic interaction, but when polarity of a target component is low, a measurement target component is held together with the phospholipids and removed together by the washing process, and sensitivity of a measurement target in the mass spectrometry may decrease.

In the mass spectrometry in the related art, prevention of ion suppression due to a sample matrix and recovery of a measurement target substance at a high recovery rate to ensure quantitativity are in a trade-off relation. When the washing process using the hydrophobic interaction is performed in order to prevent ion suppression, the recovery rate of the measurement target substance decreases, and the measurement sensitivity decreases. In the related art, in a sample containing lipids exceeding a normal amount, such as chyle, there is also a case in which a reinspection is performed after a normal measurement, giving up on both preventing the ion suppression and maintaining the measurement sensitivity.

Further, there is a plasticizer as an impurity that may cause another ion suppression. In the mass spectrometer in which the sample pretreatment is automated, a blood collection tube to which a separation agent, a coagulation accelerator, an anticoagulant, and the like having various properties are added is transferred. Depending on a kind of the separation agent, the coagulation accelerator, or the like, there is a possibility that a substance that may affect a spectrum of the mass spectrometer and a substance that may cause ion suppression are contained.

In the sample inspection automation system in PTL 1, it is stated that in a sample in which hemolysis, chyle, and jaundice in serum are observed, a flag is attached to the measurement result or subsequent measurement itself is not performed in the automatic analyzer, and interruption of the measurement itself may lead to a delay in reporting the measurement result.

Further, in the sample inspection automation system in PTL 1, it is necessary to normally monitor whether the measurement is interrupted according to sample information such as hemolysis, chyle, and jaundice, which further burdens an inspection work.

An object of the invention is to provide a control method of a sample pretreatment apparatus capable of maintaining measurement precision in a mass spectrometer without newly installing a component part and without largely changing a measurement process by an automatic analyzer.

### Solution to Problem.

In order to solve the above problems, for example, a configuration described in claims is adopted.

The present application includes a plurality of methods for solving the above problems, and an example thereof is a control method of a sample pretreatment apparatus of a sample inspection automation system to which a sample pretreatment apparatus applying pretreatment to a sample used in mass spectrometry, a mass spectrometer, and another automatic analyzer are connected. The control method includes: determining serum information by referring to a measurement result of the sample by the other automatic analyzer or previous value information; determining conditions of a washing process of eliminating impurities contained in the sample at the time of the sample pretreatment based on the serum information; and dispensing a cleaning fluid into a reaction container for mixing the sample and a reagent based on the conditions.

### Advantageous Effects of Invention

According to the invention, it is possible to provide a control method of a sample pretreatment apparatus capable of maintaining measurement precision in a mass spectrometer without newly installing a component part and without largely changing a measurement process by an automatic analyzer.

Problems, configurations and effects other than those described above will be clarified by description of the following embodiment.

### Brief Description of Drawings

[FIG. 1] FIG. 1 is a diagram showing an overall configuration of a sample pretreatment apparatus according to an embodiment.
[FIG. 2] FIG. 2 is a diagram showing a' washing process using magnetic particles in the sample pretreatment apparatus according to the embodiment.
[FIG. 3] FIG. 3 is a flowchart of sample pretreatment in the sample pretreatment apparatus according to the embodiment.

### Description of Embodiments

Hereinafter, an embodiment will be described with reference to the drawings.

Here, in the following embodiment, a method of using a sample pretreatment apparatus using magnetic particles will be described as an example. However, a washing process using this method is not limited to the method using magnetic particles.

### Embodiment

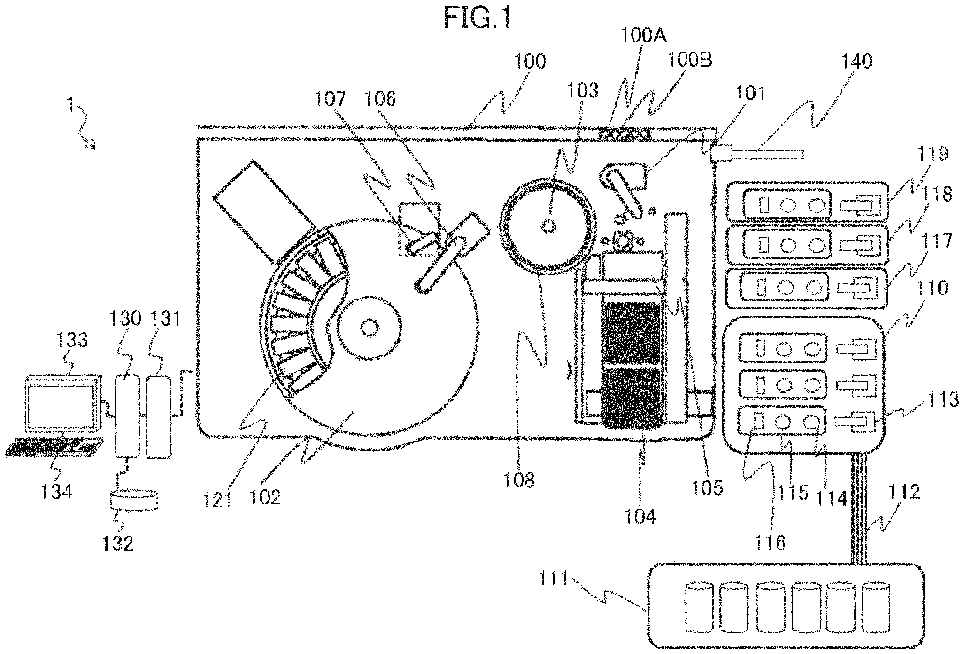

First, an overall configuration of a sample pretreatment apparatus using magnetic particles according to the present embodiment will be described with reference to FIG. 1. FIG. 1 is a diagram showing the overall configuration of the sample pretreatment apparatus according to the present embodiment.

A sample pretreatment apparatus 1 shown in FIG. 1 is an apparatus that causes a sample and a reagent to react with each other, and performs sample pretreatment using a device for measuring a reaction solution, and includes a transfer line 100, a sample dispensing mechanism 101, a reagent disk 102, an incubator 103, a magazine 104, a transfer mechanism 105, a reagent dispensing mechanism 106, a magnetic particle stirring mechanism 107, a washing unit 110, a cleaning fluid storage 111, a cleaning fluid supply mechanism 112, a cleaning fluid nozzle 113, a chamber 114, a magnetic separator 115, a mixer 116, an elution section 117, a supernatant liquid separation section 118, a liquid property adjusting section 119, a computing section 130, a control unit 131, a recorder 132, a display unit 133, an input unit 134, and an LC transfer 140.

The transfer line 100 is a line for transferring, to a sample dispensing position or the like, a rack 100B on which a plurality of sample containers 100A containing samples can be placed.

The sample dispensing mechanism 101 is a nozzle for aspirating the sample contained in the sample container 100A and ejecting the sample to a reaction container 108 on the incubator 103.

The incubator 103 is a disk for performing reaction between the sample and the reagent at a constant temperature, and the reaction between the sample and the reagent is promoted by maintaining the temperature at a predetermined temperature by a heater (not shown). The plurality of reaction containers 108 are held by the incubator 103, and serve as a place where the sample and the reagent are mixed and reacted.

The magazine 104 stores the reaction container 108 in which the sample aliquoted by the sample dispensing mechanism 101 and the reagent are placed and reacted when the sample is aliquoted and dispensed.

The transfer mechanism 105 transfers unused reaction container 108 held in the magazine 104 to the incubator 103, and transfers used reaction container 108 to a reaction container disposal unit (not shown).

The reagent disk 102 is a disk that stores a reagent container 121 containing magnetic particles and a reagent to be used for sample pretreatment and analysis, and is kept cool to prevent deterioration of the reagent.

The reagent dispensing mechanism 106 is a nozzle for aspirating the reagent stored in the reagent container 121 in the reagent disk 102 and ejecting the reagent to the reaction container 108.

The magnetic particle stirring mechanism 107 stirs a magnetic particle solution among the reagents in the reagent disk 102.

The computing section 130 checks and determines serum information on the sample with reference to one or both of a measurement result of the sample in another automatic analyzer and previous value information. Information stored in the recorder 132 may be referred to.

The control unit 131 determines conditions of the washing process to be performed in the washing unit 110 based on determination of the serum information on the sample in the computing section 130. The control unit 131 determines the conditions of the washing process and controls various operations of each unit. Control of operation of each device by the control unit 131 is executed by various programs. The program is stored in the recorder 132 and the like, and is read and executed by CPU.

Operation control processes executed by the control unit 131 may be integrated into one program, may be divided into a plurality of programs, or may be performed by a combination of the one program and the plurality of programs. Further, a part or all of the programs may be implemented by a dedicated hardware, or may be modularized.

The recorder 132 records various computer programs for executing control and the like of the operation of each connected device, such as the sample pretreatment apparatus and a mass spectrometer, and also records various display functions and analysis results by the mass spectrometer. The recorder 132 includes a recording medium such as a flash memory or a magnetic disk such as an HDD.

The recorder 132 records various conditions of the washing process performed by the washing unit, such as a kind of cleaning fluid, a mixed ratio of the cleaning fluid, the number of times of washing, and washing temperature, and also records a washing pattern obtained by combining the respective conditions.

The display unit 133 is a display device such as a liquid crystal display that displays information on the analysis result and a progress status of the analysis.

The input unit 134 includes a keyboard, a mouse, and the like for inputting data.

The washing unit 110 executes a washing process in the sample pretreatment for removing impurities in the sample based on the washing process determined by the control unit 131.

The cleaning fluid storage 111 is an area for storing a necessary and selectable cleaning fluid, and is connected to the cleaning fluid supply mechanism 112. Based on the conditions determined by the control unit 131, a necessary amount of a necessary cleaning fluid is supplied to the chamber 114 by the cleaning fluid supply mechanism 112.

The cleaning fluid nozzle 113 is provided with two nozzles of a cleaning fluid aspiration nozzle and a cleaning fluid ejection nozzle (not shown), and both drainage after washing and supply of the cleaning fluid can be performed. The cleaning fluid supplied to the chamber 114 is dispensed into the reaction container 108 by the cleaning fluid ejection nozzle.

The mixer 116 stirs the dispensed cleaning fluid and sample by a rotating operation. The reaction container 108 is transferred to each unit by the transfer mechanism 105.

The magnetic separator 115 performs a magnetic separation process on the reaction container 108 into which the magnetic particle solution and the cleaning fluid are dispensed. A washing process performed in the magnetic separator 115 is performed to remove impurities derived from a biological sample remaining in a mixed solution of the sample, the reagent, and the magnetic particles. After a predetermined time has elapsed, and after the magnetic separation is ended, the cleaning fluid aspiration nozzle performs drainage after washing.

The elution section 117 ejects an organic solvent to elute a measurement target substance adhering to the magnetic particles.

The supernatant liquid separation section 118 dispenses the separated measurement target substance into a new reaction container 108 transferred by the transfer mechanism 105.

In order to adjust the sample to a liquid property suitable for separation by LC, the liquid property adjusting section 119 adjusts and stirs a diluent or the like.

The LC transfer 140 transfers the sample to which a series of sample pretreatment is completed to the LC.

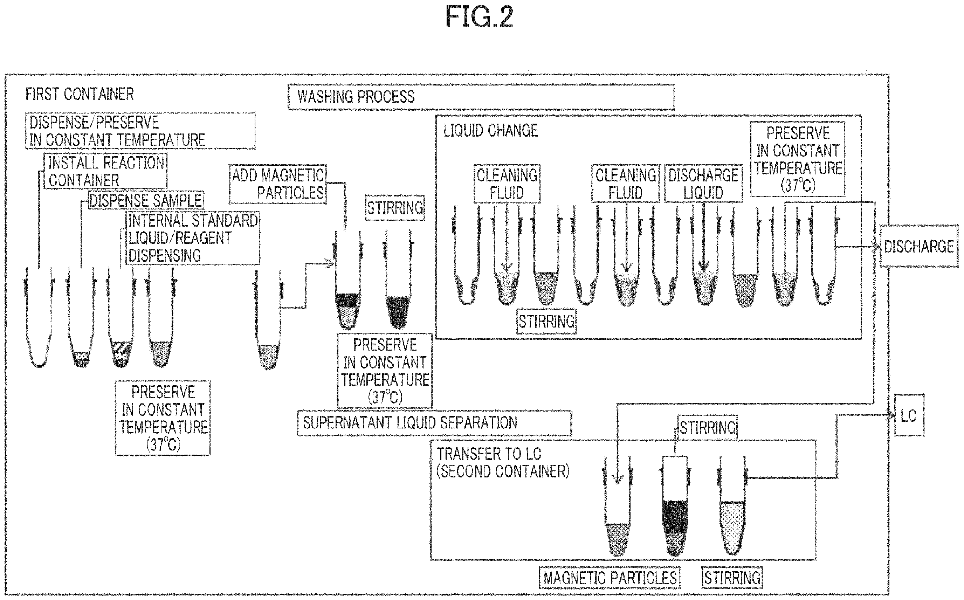

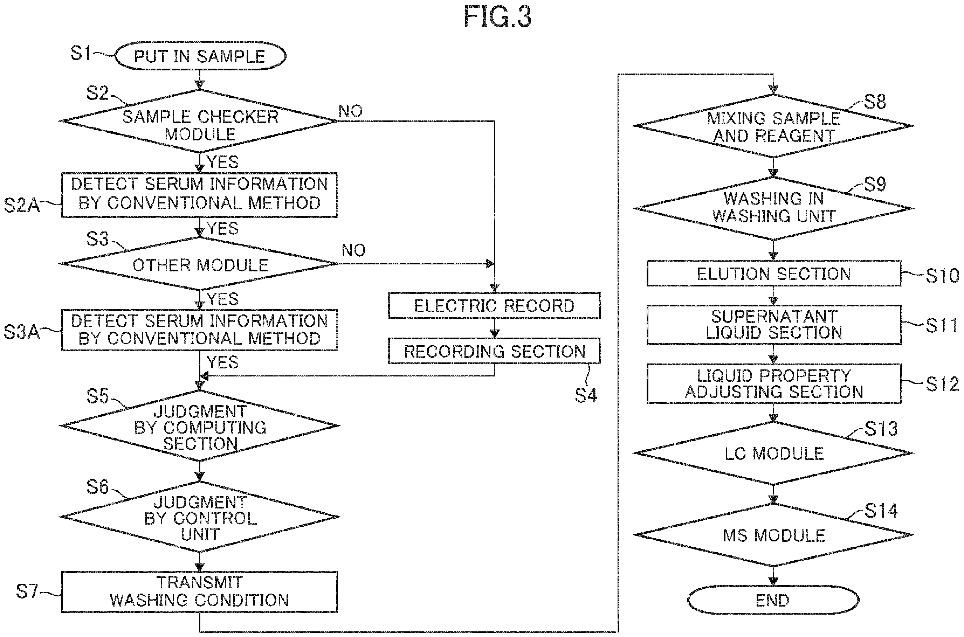

Next, an overall flow of the sample pretreatment in the sample pretreatment apparatus 1 according to the present embodiment shown in FIG. 1 will be schematically described with reference to FIG. 2 and FIG. 3. As an example of the washing process, a washing process using magnetic particles will be described this time. Before starting the sample pretreatment, a user places necessary assay reagents and consumables such as the reaction containers 108 in the reagent disk 102 and the magazine 104 in the analyzer.

First, the user puts the rack 100B into the mass spectrometer and the automatic analyzer in a state in which a sample such as blood or urine to be analyzed is put in the sample container 100A (S1).

At this time, the computing section 130 checks whether a sample checker module is connected in addition to the sample pretreatment apparatus and the mass spectrometer that perform pretreatment to the sample used in the mass spectrometry (S2), and detects serum information by an existing technique when the sample checker module is connected (S2A).

The computing section 130 checks whether other modules such as a biochemical automatic analyzer, an immune automatic analyzer, an electrolyte analyzer, or a sample checker module is connected (S3). When other modules are connected, serum information is detected by the existing technique (S3A).

When none of the modules is connected, the computing section 130 checks an electronic medical record and the recorder and check patient information such as the previous value information and past medical history.

The computing section 130 refers to the information in S2 to S4 or the measurement result from others connection module, and determines whether the sample information includes a high lipid sample or a sample suspected of having phospholipids at a high value in other related items, or serum information that affects other measurements (S5).

The serum information transmitted from the computing section 130 is transmitted to the control unit 131, and the control unit 131 determines washing conditions (S6). As an example, washing is performed by sequentially using two kinds of cleaning fluids. A cleaning fluid A is an aqueous solution, and mainly removes coexisting substances such as inorganic salts. A cleaning fluid B is a solution containing an organic solvent, and mainly removes coexisting substances such as lipids and proteins. When a lipid range is normal and no other abnormal points are found in the serum information, for example, the cleaning fluid is selected as 100% acetonitrile and the number of times of washing are selected as once, and the washing conditions are transmitted to the washing unit (S7) .

During this period, the sample pretreatment is continued in the sample pretreatment apparatus (S8). Hereinafter, an outline of the sample pretreatment in the sample pretreatment apparatus will be described. The unused reaction container 108 is transferred to the incubator 103 by the transfer mechanism 105. When the rack 100B passes through the transfer line 100 and reaches the sample dispensing position, the sample is dispensed into the reaction container 108 by the sample dispensing mechanism 101. After dispensing the sample into the reaction container 108, an internal standard solution containing an isotope of the measurement target at a predetermined concentration is dispensed. At this time, the reaction container 108 is kept at a constant temperature of 37°C in the incubator 103.

Thereafter, by the reagent dispensing mechanism 106 accessing the reagent disk 102, an assay reagent stored in the reagent container 121 and to be used for mass spectrometry is dispensed into the reaction container 108 on the incubator 103, and the reaction between the sample and the reagent is started.

After the reaction of the sample and the assay reagent is started, magnetic particles with antibodies bound to surfaces thereof are further added to the reaction container 108 at a specific timing. At this time, the reaction container 108 is also kept at the constant temperature of 37°C in the incubator 103. The reaction container 108 placed in the incubator 103 for a predetermined time is transferred to the washing unit 110 by the transfer mechanism 105.

Washing is performed based on the washing process determined by the control unit 131 (S9). A cleaning fluid that satisfies the washing conditions is ejected from the cleaning fluid supply mechanism 112 to the chamber 114. After the cleaning fluid is ejected, the reaction container 108 is transferred to the mixer 116 by the transfer mechanism 105, and the cleaning fluid and the sample are stirred.

Thereafter, the reaction container 108 is transferred to the magnetic separator 115 by the transfer mechanism 105, and magnetic separation in the reaction container 108 is performed. Thereafter, unnecessary cleaning fluid is discharged by the cleaning fluid nozzle 113.

After the magnetic separation process is ended, the reaction container 108 is transported to the elution section 117 by the transfer mechanism 105. An eluate using an organic solvent such as acetonitrile is dispensed into the reaction container 108 and stirred by the mixer 116. Elution is carried out at 37°C for a predetermined period of time, and the measurement target substance bound to the magnetic particles is eluted into the eluate (S10).

The reaction container 108 from which the measurement target substance is eluted in the elution section 117 is transported to the supernatant liquid separation section 118 by the transfer mechanism 105. In the supernatant liquid separation section 118, the remaining magnetic particles are again aggregated by magnetic separation, and supernatant liquid is collected in the meantime (S11).

In the liquid property adjusting section 119, a diluent for adjusting the supernatant liquid to a liquid property suitable for separation by the LC is dispensed (S12). The sample subjected to the series of pretreatment is finally transferred to the LC by the LC transfer 140 (S13) . After the separation in the LC, the sample is transferred to a mass spectrometry (MS) module, measured by a detector of the MS module, and a concentration of the measurement target substance in the sample is obtained, and a result is displayed on the display unit 133 and notified to the user, and is recorded in the recorder 132 (S14).

After all the measurements are completed, the reaction container 108 is transported to the reaction container disposal unit (not shown) by the LC transfer 140 and disposed.

Next, an outline of a washing method used in the sample pretreatment apparatus 1 according to the present embodiment for the high lipid containing sample whose sample information is determined to be chyle by the computing section 130 will be described.

Similarly to the normal serum, the computing section 130 refers to the information in S2 to S4 or the measurement result from other connection modules, and determines whether the sample information includes a high lipid sample or a sample suspected of having phospholipids at a high value in other related items, or serum information that affects other measurements (S5). Determination criteria are stored in the computing section, and as an example, according to a guideline of dyslipidemia, a determination is made by applying the criteria of LDL cholesterol Z 140 mg/dL, HDL cholesterol < 40 mg/dL, and neutral fat Z 150 mg/dL, and it is determined whether the sample deviates from the determination criteria.

Further, the computing section may also determine whether the measurement result exceeds a reference range in the inspection items of other connection modules such as neutral fat, LDL cholesterol, HDL cholesterol, total cholesterol, β-lipoprotein, lipoprotein (a), remant-like lipoprotein-cholesterol, apolipoprotein (apoprotein) A-I, apolipoprotein (apoprotein) A-II, apolipoprotein (apoprotein) B, apolipoprotein (apoprotein) C-II, apolipoprotein (apoprotein) C-III, and apolipoprotein (apoprotein).

Alternatively, when the measurement results of the inspection items described above is not recorded from other connection modules at the time of the inspection, the computing section 130 may determine patient information connected to in-hospital electronic medical record or the like using the recorder 132, HIS, LIS, or STS, and the previous value information on the items described above. The computing section may determine whether there is a past medical history, such as high lipidemia, diabetes, nephrotic syndrome, hypothyroidism, acute pancreatitis, chronic pancreatitis, obesity, cushing syndrome, and may determine that there is a high possibility of a high lipid containing sample when there is a corresponding medical history.

In a case in which it is determined that the serum information is a high lipid containing sample by the determination executed by the computing section (S5), washing conditions of 5% of water, 95% of acetonitrile, and two times of washing are selected as an example of the cleaning fluid in the washing process in the washing unit, and the washing conditions are transmitted to the washing unit. When the number of times of washing is set to a plurality of times, the reaction container is transferred to another washing unit, and the washing process is performed again.

Further, the washing process is usually performed at room temperature, but when a temperature of 37°C or higher is set, a temperature adjustment mechanism (not shown) is provided in the magnetic separator 115, and the washing process can be performed at a designated temperature.

There are some patterned combinations of these washing conditions for the control unit 131. As an example, when sample information of 150 mg/dL to 200 mg/dL of neutral fat is obtained, the "5% of water, 95% of acetonitrile, and two times of washing" is selected as pattern 1. When content of the neutral fat is 200 mg/dL or more, "8% water, 92% acetonitrile, two times of washing, and temperature setting 37°C" may be selected as pattern 2 in which a ratio of the hydrophobic cleaning fluid is further decreased.

The washing conditions are displayed in a maintenance item field or the like on an analysis screen of the display unit 133, and the user can manually select and set each condition.

Further, in the maintenance item field on the analysis screen of the display unit 133, the user can also check under what conditions the current washing process is performed. Alternatively, when the user checks the analysis result, it is also possible to add the conditions of the washing process performed to the measurement result.

Although the washing conditions for the high lipid sample are described in the present embodiment, for the above patterns, it is also possible to refer to serum information such as hemolysis and jaundice, or information on blood collection tube in use, or the like in the computing section, and to select a washing pattern suitable for each of them in the control unit.

As described above, in the present embodiment, in the sample pretreatment apparatus that performs pretreatment to the sample used in the mass spectrometry, it is possible to change the kind and the ratio of the cleaning fluid, the number of times of washing, and the washing temperature used for washing performed in the washing unit at the time of the sample pretreatment with respect to a high lipid sample, a sample suspected of having phospholipids at a high value, or the sample that is determined to be serum other than chyle such as hemolysis or jaundice, by using the information and the measurement result from other connection modules such as the biochemical automatic analyzer, the immune automatic analyzer, the electrolyte analyzer, and the sample checker module.

Next, effects of the present embodiment will be described.

The above sample pretreatment apparatus 1 according to the present embodiment can identify a high lipid containing sample which is likely to be overlooked, by automating sample pretreatment that is performed by a method performed by a user in the related art. This is an effective method for a mass spectrometer which can be connected to other biochemical automatic analyzers, immune automatic analyzers, electrolyte analyzers, sample checker modules, and the like and can use information from other modules.

Based on the trade-off relation between the prevention of the ion suppression and the high recovery rate of the measurement target substance in the mass spectrometry in the related art, it is possible to prevent ion suppression, maintain measurement sensitivity, and ensure measurement quantitativity while maintaining sufficient sample measurement sensitivity under normal washing conditions by accurately identifying a high lipid containing sample exceeding a normal range and performing the washing process in the present embodiment, without uniformly applying the same washing method.

As in the sample inspection automation system disclosed in PTL 1 described above, when a flag is attached to the measurement result and the measurement itself is interrupted, a delay in reporting the measurement result occurs. Therefore, although it is necessary to normally monitor the serum information during the measurement, since the computing section and the control unit automatically determine the washing process based on the information from the other connection modules according to the washing process in the present embodiment, it is not necessary to monitor the apparatus by a user who performs a plurality of operations, and burden on the user can be reduced.

Further, according to the washing process in the present embodiment, by preventing contamination of the sample pretreatment apparatus, an LC pipe, an MS main body, an MS detector, and the like due to lipids, it is possible to prevent deterioration or failure of the apparatus, or failure or breakage of the MS detector.

Further, according to the washing process in the present embodiment, the column used in the LC is prevented from being contaminated, and thus the column can be used as a consumable without shortening the life.

Since the washing process in the present embodiment can be performed without installing a new unit or a component part, it is possible to prevent an increase in size of the apparatus.

In the sample pretreatment apparatus, one or a plurality of other connection modules may be connected. An order in which the connection modules are connected is not specified.

The invention is not limited to the above embodiment, and includes various modifications. For example, the above embodiment has been described in detail for easy understanding of the invention, and the invention is not necessarily limited to those including all of the configurations described above.

### Reference Signs List

1: sample pretreatment apparatus
100: transfer line
100A: sample container
100B: rack
101: sample dispensing mechanism
102: reagent disk
103: incubator
104: magazine
105: transfer mechanism
106: reagent dispensing mechanism
107: magnetic particle stirring mechanism
108: reaction container
110: washing unit
111: cleaning fluid storage
112: cleaning fluid supply mechanism
113: cleaning fluid nozzle
114: chamber
115: magnetic separator
116: mixer
117: elution section
118: supernatant liquid separation section
119: liquid property adjusting section
130: computing section
131: control unit
132: recorder
133: display unit
134: input unit
140: LC transfer

## Claims

1. A control method of a sample pretreatment apparatus of a sample inspection automation system to which a sample pretreatment apparatus applying pretreatment to a sample used in mass spectrometry, a mass spectrometer, and another automatic analyzer are connected, comprising:
determining serum information by referring to a measurement result of the sample by the other automatic analyzer or previous value information,
determining conditions of a washing process of eliminating impurities contained in the sample during the sample pretreatment based on the serum information; and
dispensing a cleaning fluid into a reaction container for mixing the sample and a reagent based on the conditions.

2. The control method of a sample pretreatment apparatus according to claim 1,
wherein the measurement result of the sample in the other automatic analyzer or the previous value information is referred to and whether the sample is a sample having a possibility of occurrence of ionization suppression in the mass spectrometry is determined.

3. The control method of a sample pretreatment apparatus according to claim 2,
wherein a kind of the cleaning fluid or a mixed ratio of the cleaning fluid is changed based on the serum information.

4. The control method of a sample pretreatment apparatus according to claim 3,
wherein the number of times of washing or a washing temperature in the washing process is changed based on the serum information.

5. The control method of a sample pretreatment apparatus according to any one of claims 1 to 4,
wherein a reagent containing magnetic particles is dispensed into the reaction container, and magnetic components and nonmagnetic components in the reaction container are separated to conduct the washing process.
